# EUROPEAN PATENT APPLICATION

(11) **EP 1 757 516 A1**
(43) Date of publication of application: **28.02.2007**
(21) Application number: 06090147.7
(22) Date of filing: 23.08.2006
(51) Int. Cl.: B62D 63/06

(54) **Trailer with multi position tailgate**

(30) Priority: 26.08.2005 CA 2517419
(71) Applicant: Linamar Corporation, Guelph, Ontario N1H 5C (CA)
(72) Inventor: Jager, Bill, Breslau, Ontario N0B 1M0 (CA)
(74) Representative: Effert, Udo

(57) **Abstract**

A gate assembly for a trailer (10) which provides for the gate assembly to be moved to a plurality of various positions preferably including two or more of a closed position, a position in which the tailgate (15) extends rearwardly as a load supporting extension of the bed (12), a ramp position and a storage position in which the tailgate folds flat over the bed (12).

## Description

### Scope of the Invention

This invention relates to a construction for a trailer and, more particularly, to a novel gate assembly for a trailer, a stackable construction for a trailer, a knock-down construction for a trailer and removable wheel assemblies for a trailer.

### Background of the Invention

Known trailers have the disadvantage that they typically occupy a substantial volume for storing and shipment. Known trailers are difficult to stack or palletize. Known trailers suffer the disadvantage that they are typically difficult to assemble when provided disassembled. Known trailers suffer the disadvantage that wheel assemblies are difficult to remove and/or occupy substantial volumes when stored or shipped.

Known tailgate assemblies for a trailer suffer the disadvantage that the tailgates typically can only occupy a number of different positions.

### Summary of the Invention

To at least partially overcome some of these disadvantages of previously known devices, the present invention provides a gate assembly for a trailer which provides for the gate assembly to be moved to a plurality of various positions preferably including two or more of a closed position, a position in which the tailgate extends rearwardly as a load supporting extension of the bed, a ramp position and a storage position in which the tailgate folds flat over the bed.

To at least partially overcome some of these disadvantages of previously known devices, the present invention provides a construction for a trailer permitting trailers to be nested for storage and shipment.

To overcome other disadvantages of previously known devices, the present invention provides a trailer with a removable wheel support and suspension assembly facilitating storage of the wheels.

In one aspect, the present invention provides a trailer comprising:
- a bed supported on a wheel assembly, the bed having an upper deck surface ending at a deck edge,
- a gate member having a base edge opposite to a top edge, and two side edges bridging between the base edge and the top edge,
- the gate base edge coupled to the deck open edge of the bed by a coupling mechanism for pivoting about a generally horizontal axis between a closed position in which the gate extends from the deck open edge upwardly away from the bed open edge and an extension position in which the gate member extends outwardly from the bed as an extension of the bed with the base edge engaging the deck edge from below inwardly of the axis to prevent pivoting of the top edge of the gate member downwardly beyond the extension position.

In another aspect, the present invention provides a trailer comprising:
- a bed supported on a wheel assembly, the bed having an upper deck surface ending at a deck edge,
- a gate member having a base edge opposite to a top edge, and two side edges bridging between the base edge and the top edge,
- the gate base edge coupled to the deck open edge of the bed by a coupling mechanism for pivoting about a generally horizontal axis between closed positions in which the gate extends from the deck open edge upwardly away from the bed open edge and open positions in which the gate extends downwardly away from the bed open edge permitting movement of the gate member relative to the bed between a plurality of positions,
- the coupling mechanism comprising:
   - pin members carried the gate member proximate the base edge extending parallel the axis,
   - the pin members spaced from each other longitudinally of the axis,
   - support bracket members carried by the bed proximate the deck edge generally normal to the axis,
   - the bracket members spaced from each other longitudinally of the axis,
   - each bracket members having a slotway therethrough sized to receive a respective one of the pin members and guide the pin member received in its respective slotway for sliding movement in the slotway between a plurality of different positions,
   - the different positions including a first position and a second position,
   - in the first position, the pin member is pivotable in the slotway for pivoting of the gate member between the open position and the closed position without interference with the deck edge,
   - in the second position, the pin member permits location of the gate member relative to the bed in an extension position in which the gate member extends outwardly from the bed as an extension of the bed with the base edge engaging the deck edge from below inwardly of the pin member to prevent pivoting of the top edge of the gate member downwardly from the extension position.

Further aspects and advantages of the present invention will become apparent from the following description taken together with accompanying drawings in which:
Figure 1 is a schematic pictorial view of a trailer in accordance with a first embodiment of the present invention in a closed, boxed configuration;
Figure 2 is a pictorial view of the trailer of Figure 1 with a tailgate in a ramp position;
Figure 3 is a pictorial view of the trailer of Figure 1 with both the tailgate and front gate in bed extending positions;
Figure 4 is a schematic exploded pictorial view of the rear of the trailer and tailgate of the trailer of Figure 1;
Figure 5 is a schematic side view of the trailer of Figure 2 showing the tailgate in a ramp position;
Figure 6 is a schematic side view of Figure 3 showing the tailgate in a bed extending position;
Figure 7 is a side view similar to that in Figures 5 and 6, however, showing the tailgate in a storage position folded flat over the bed;
Figure 8 is a schematic rear end view of the trailer shown in Figure 1 with the tailgate removed;
Figure 9 is a schematic exploded pictorial view of the trailer of Figure 1 in a partially disassembled, partially collapsed configuration;
Figure 10 is a schematic pictorial view of a wheel assembly shown in Figure 9;
Figure 11 is a cross-sectional side view through a torsion member and its socket shown in Figure 10 untensioned;
Figure 12 is a cross-sectional side view similar to that in Figure 11, but with the torsion member tensioned in its socket;
Figure 13 is a side view of three trailers the same as that shown in Figure 1, each in a collapsed, disassembled configuration and stacked for shipment;
Figure 14 is a cross-sectional side view through two stake post members of the trailers in Figure 13 showing nesting of the stake post members;
Figure 15 is a schematic, pictorial side view illustrating a forklift holding one collapsed disassembled trailer as shown in Figure 13 for assembly;
Figure 16 is a side view of a trailer the same as that in Figure 1 but showing a pair of wheel assemblies;
Figure 17 is a side view of a trailer in accordance with the second embodiment of the present invention in a collapse disassembled configuration for shipment and storage;
Figure 18 is a cross-sectional side view along section line 18-18' in Figure 17;
Figure 19 is a cross-sectional view along section line 19-19' in Figure 18;
Figure 20 is a pictorial view of a spacer for use with the second embodiment of Figure 17;
Figure 21 is a pictorial view of a loading bracket for use with the second embodiment of the invention;
Figure 22 is a schematic side view of a plurality of trailers in accordance with the second embodiment of Figure 17, stacked space from another using the spacer of Figure 20 and the loading brackets of Figure 21.

### Detailed Description of the Drawings

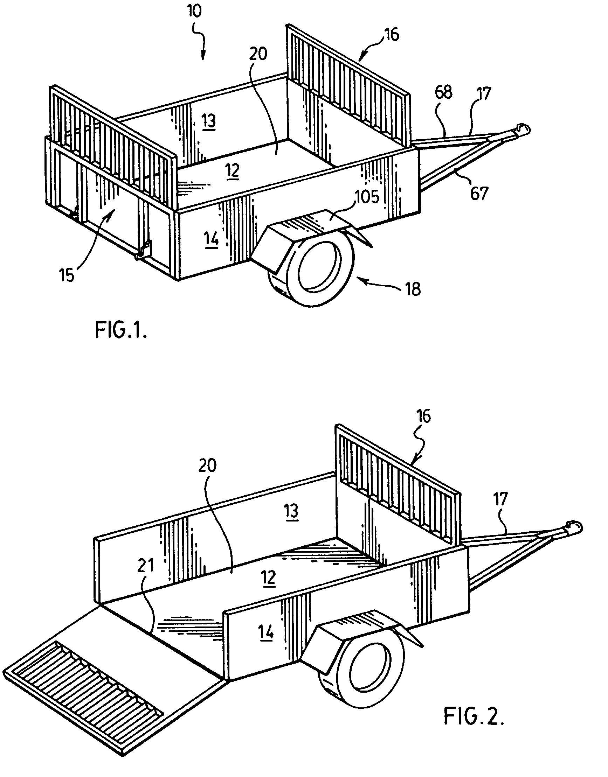

Reference is made first to Figures 1 to 4 which illustrate a utility trailer 10 adapted to be towed behind a vehicle, preferably, a motorized vehicle, not shown.

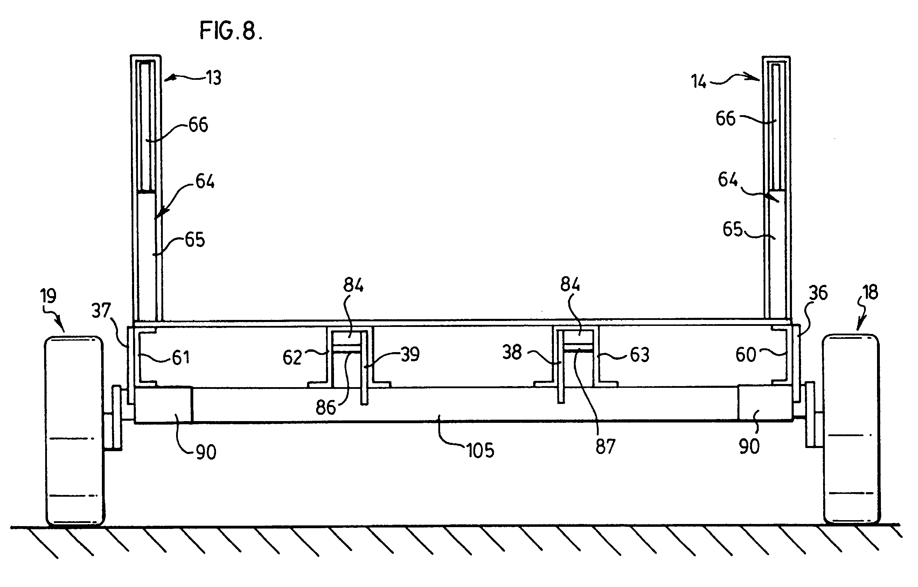

The trailer 10 has a bed 12, side walls 13 and 14, a rear gate 15, a front gate 16, a tongue 17 and a pair of wheel assemblies 18 and 19, both shown in Figure 8. The tongue 17 extends forwardly from the trailer as for coupling to a vehicle to tow the trailer.

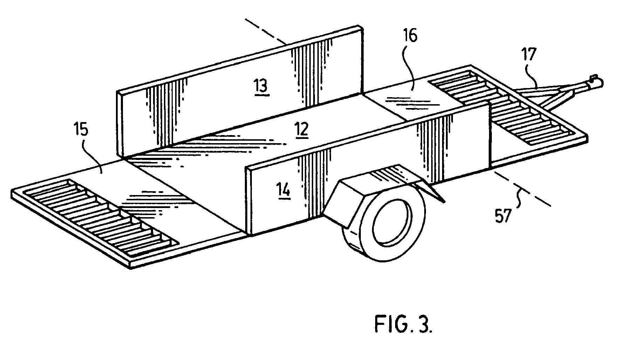

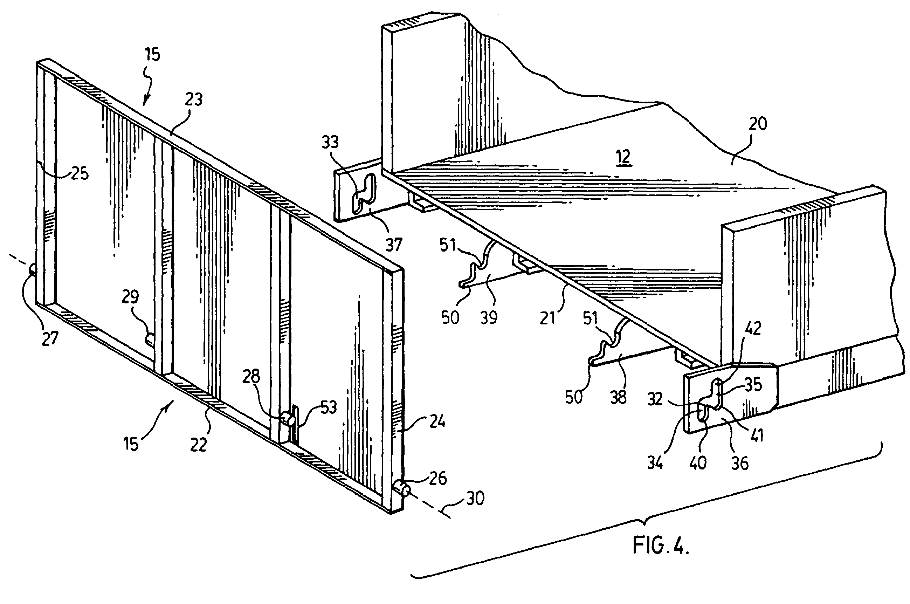

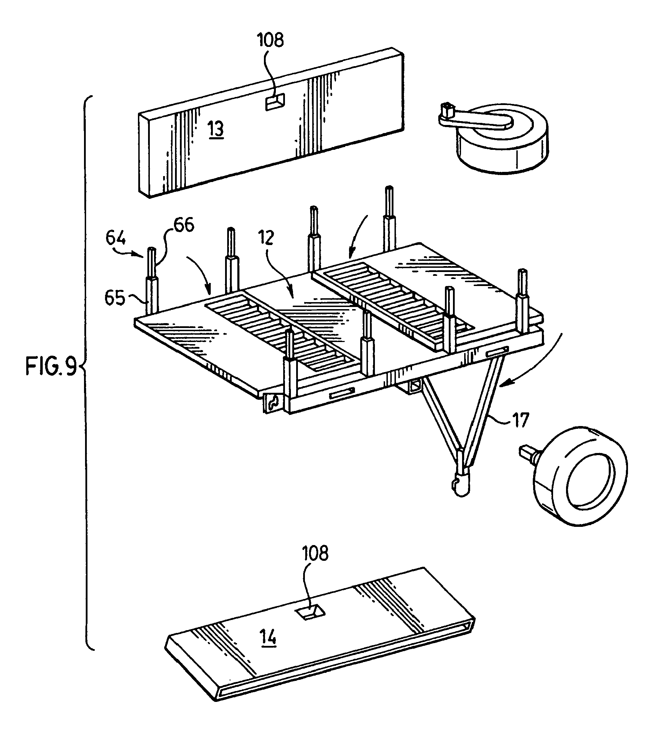

The bed 12 has an upper deck surface 20 ending at a rear deck edge 21. As best seen in Figure 4, the rear gate 15 is shown as a generally planar rectangular member having a base edge 22, a top edge 23 and two side edges 24 and 25 bridging between the base edge 22 and the top edge 23. The rear gate 15 is coupled to the remainder of the trailer, notably the bed 12 for movement to a number of different positions including an upright closed position as, for example, shown in Figure 1, a ramp position as shown in Figure 2, a bed extending position as shown in Figure 3 and a storage position as illustrated in Figure 9.

The rear gate 15 is coupled to the bed 12 for movement between the various positions by means of a coupling mechanism. As seen in Figure 4, the coupling mechanism includes a pair of exterior pins 26 and 27 extending from the side edges 24 and 25 of the rear gate 15 and a pair of interior pins 28 and 29. Each of the pins 26, 27, 28 and 29 are coaxially disposed about an axis 30. Four support bracket members are carried on the bed 12 for engagement with these pins. The support bracket members include two exterior support brackets 36 and 37 to engage the pins 26 and 27, respectively, and two interior support brackets 38 and 39 to engage the pins 28 and 29, respectively. The exterior support brackets 36 and 37 have slotways 32 and 33 therein in which the pin members 26 and 27 are received. The slotways 32 and 33 are identical and only slotway 32 is expressly described. Slotway 32 as two generally vertically extending channelway portions 34 and 35. The first, forward channelway portion 34 has a lower blind end 40. The second, rear channelway portion 35 has a lower blind end 41. Each of the forward and rear channelway portions 34 and 35 have a width marginally greater than the diameter of the pins 26 and 27. Each of the lower blind ends 40 and 41 have a semi-circular lower surface and are sized marginally greater than the diameter of the pins 26 and 27 to assist in journaling a pin 26 or 27 about the axis 30 when received therein. The rear channelway portion 35 also includes an upper blind end 42 which is also semi-circular and is adapted to assist in journaling its respective pin member therein.

The forward channelway portion 34 is at its upper end open to the second channelway portion 35 via a generally horizontally extending bridging channelway portion 36 which opens into the rear channelway portion 35 in between its lower blind end 41 and its upper blind end 42. As seen, the front lower blind end 40 is disposed outwardly, that is, rearwardly, and downward relative to the position of the rear lower blind end 41. The upper blind end 42 is disposed upward from the rear blind end 41 and upward and rearward from the forward blind end 40. The channelway portions 34, 35 and 43 are sized that a respective pin member, for example, pin 26 or 27 received therein, may be moved longitudinally of each of the slotways portion to assume any location within the channelway portions 34, 35 and 43.

The interior brackets 38 and 39 have profiles which are identical to the lower portions of the slotways of the exterior support brackets 36 and 37 and are adapted for engaging of the intermediate pins 28 and 29 in a similar manner over their front lower blind ends 50 and their rear lower blind ends 51. Access openings 53 extend through the face of the rear gate 15 to permit the interior support members 38 and 39 to extend thereto and engage the pins 28 and 29. With the rear gate 15 assembled on the bed 12, the pins 26 and 27 extend horizontally outwardly through the respective slotways 32 and 33 and the interior pins 28 and 29 similarly extend horizontally over the interior support brackets 38 and 39.

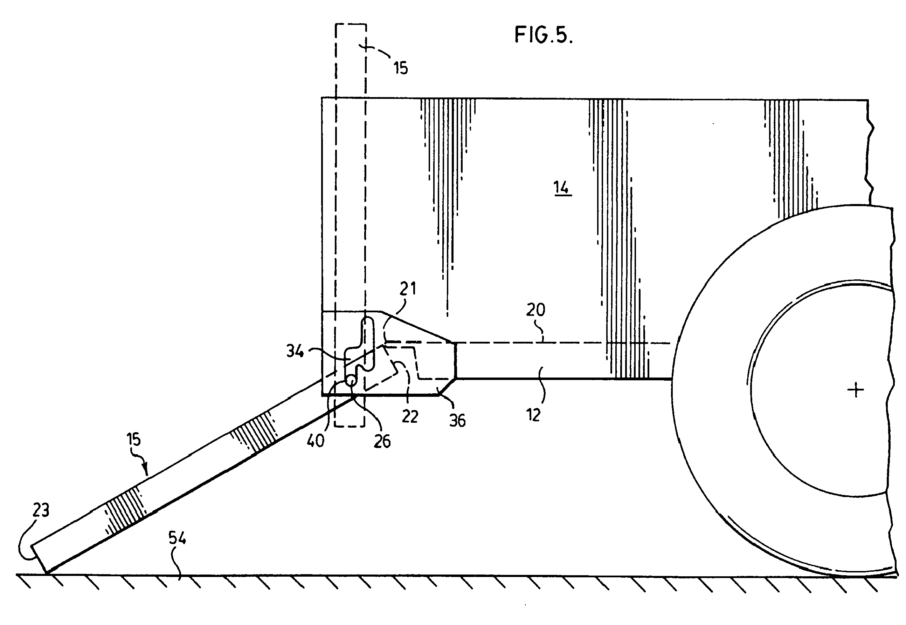

Reference is made to Figure 5 which illustrates the rear gate 15 in a position in which the exterior pins 26 and 27 are received within forward blind ends 40 of the forward channelway portions 34 of the slotways 32 and 33 in the support bracket 36 and 37, and the interior pin 28 and 29 are received in the forward blind ends 50 of the interior support brackets 38 and 39. In this position, the rear gate 15 is free to pivot about a horizontal axis 30 through the pins which axis 30 is effectively coaxially disposed within the semi-circular lower blind ends 40 and 50. As shown in Figure 5, the rear gate 15 as seen in solid lines is in a ramp position in which it has been pivoted about the pin 26 to a position that its top edge 23 engages the surface of the ground indicated as 54. The angle at which the rear gate 50 will assume on engaging the ground 54 will be a function of the height dimension of the rear gate 15 and the distance of the bed 12 above the ground. Of course, the rear gate 15 may be altered to have a greater height dimension between its base edge 22 and top edge 23 and may, for example, be selected to be sufficiently small so as to not engage the ground and merely hang downwardly or be selected to be sufficiently larger such that a lesser slope will be provided when it engages the ground 54. In the ramp position, the gate 15 may be used as an access ramp as, for example, to roll vehicles up the ramp onto the bed 12.

From the ramp position illustrated in solid lines in Figure 5, the rear gate 15 may be pivoted clockwise to a vertical, rear closed position as illustrated in dashed lines in Figure 5. In this rear closed position, the rear gate 15 may be secured to the side walls 13 and 14 to close the rear of the trailer by a locking mechanism, not shown. In pivoting between the closed and ramp positions shown in Figure 5, it is to be seen that the base edge 22 of the rear gate 15 is spaced from and avoids interference with the rear deck edge 21.

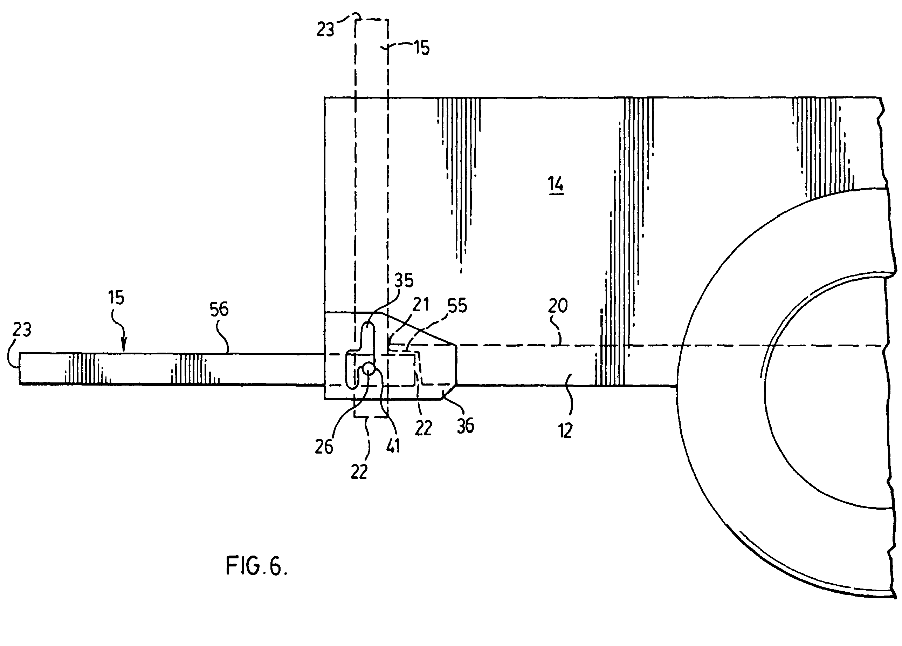

Reference is made to Figure 6 which illustrates the rear gate 15 with the pins received and journalled in the lower blind end 41 of the rear channelway portion 35 of the outer support brackets 36 and 37 and the lower blind ends 51 of the intermediate support brackets 38 and 39. As seen in solid lines in Figure 6, the rear gate 15 extends rearwardly of the bed 12 horizontal to the bed 12 in an extending position. The bed 12 has proximate its deck edge 21 and under surface 55 which is engaged by the rear gate 15 proximate its base edge 22 so as to prevent pivoting of the rear gate 15 about the pin 26 beyond a generally horizontal position illustrated in Figure 6. With the rear gate 15 in the deck extending position illustrated in Figure 6, an inner surface 56 of the rear gate 15 is adapted to support loads for the trailer and, in effect, provides an extension of the load carrying surface of the upper deck surface 20, preferably flush with and in the same flat plane as the upper deck surface 20. From this bed extending position illustrated in solid lines in Figure 6, the rear gate 15 may be rotated clockwise about its pins to a rear closed position as illustrated in dashed lines in Figure 6.

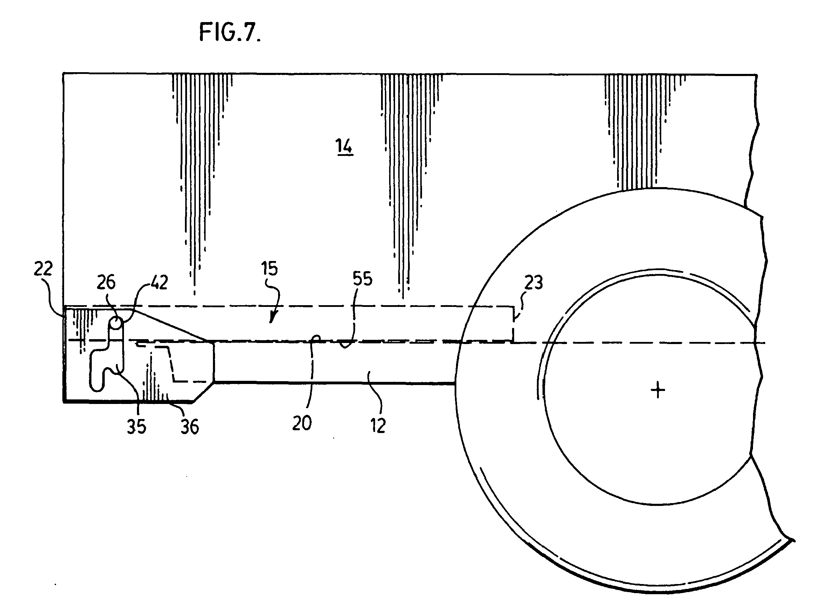

Reference is made to Figure 7 which illustrates the rear gate 15 with its pin 26 as well as its pin 27, not shown, disposed within the upper blind ends 42 of the rear channelway portions 35 of the outer support brackets 36 and 37. In this position, the rear gate 15 lies flat upon the bed 12 with the inner surface 55 of the rear gate 15 flat upon the upper deck surface 20. As shown in Figure 7, the gate base edge 22 is disposed such that it does not extend rearwardly beyond the rearmost portion of the trailer shown as the rear of the support brackets 36 and 37. The rear gate 15 is illustrated in Figure 7 as being in the storage position which storage position is also shown in Figures 9, 13 and 15.

The rear gate 15 is preferably provided to be sufficiently lightweight that it can be manipulated manually by one or more persons so that its pins will assume one or more of the three positions illustrated in Figures 5, 6 and 7 and, in each position, the rear gate 15 may be pivoted to the various rotational positions available. With the rear plate 15 in either of the positions illustrated in Figure 5, the rear gate 15 may be manually lifted and moved rearwardly such that the pins 26 and 27 are removed from the first channelway portions 34 and come to engage in the second rear channelway portions 35, for example, to rest within the lower blind ends 41 and 51. Further, from the position illustrated in Figure 6, by lifting the rear gate 15 and pivoting its top end 23 forwardly, the rear gate 15 may be manually placed into the storage position of Figure 7.

Each of Figures 5 and 6 illustrate a closed position and is advantageous that the rear gate 15 be capable of being locked in a closed position whether a forward closed position as illustrated in Figure 5 or rear closed position as illustrated in Figure 6 or some closed position intermediate each for convenient use of the trailer, possibly with a single latch locking the rear gate 15 proximate either of the forward and rear closed positions.

The rear gate 15 is effectively illustrated to preferably be capable of assuming for positions, namely, an upright closed position, a ramp position, a bed extending position and a storage position. It is to be appreciated that only two or more of these positions may be provided although, advantageously, three or all four positions may be provided.

The preferred embodiment illustrates an advantageous arrangement for providing support brackets 36, 37, 38 and 39 on the bed 12 and pins 26, 27, 28 and 29 on the rear gate 15. It is to be appreciated to a person skilled in the art that this arrangement could be reversed in whole or in part with the equivalently functional brackets being provided on the rear gate 15 and the pin members being provided on the bed 12 or some combination thereof without departing from the scope of this invention.

The preferred embodiment illustrates four pins 26, 27, 28 and 29 engaged on four brackets 36, 37, 38 and 39. It is to be appreciated that, for example, only the outer support brackets 36 and 37 need be provided. It is advantageous to provide the interior support brackets 38 and 39 as, for example, on a trailer in accordance with the preferred embodiment in which longitudinally extending beam members for load carrying are provided internally of the lateral sides of the trailer.

Referring to Figures 1, 3 and 9, the trailer 10 includes a front gate 16 which is hingedly coupled to the front of the bed for pivoting about a generally horizontal axis shown as 57 in Figure 3 between an upright closed position as illustrated in Figure 1, a bed extending position as illustrated in Figure 3 and a storage position as illustrated in Figure 4. The hinge structure for coupling the front gate 16 preferably comprises a simple hinge structure which provides for pivoting movement about the axis 57 from the storage position of Figure 9 to the upright closed position of Figure 1 and to the bed extending position shown in Figure 3.

In an assembled trailer, the tongue 17 preferably is fixed to the bed 12 so as to extend forwardly from the trailer 10. The front gate 16 in the bed extending position rests on top of the tongue 17 supported by the tongue 17 so as to bear loads. Thus, as seen in Figure 3, with both the rear gate 15 and the front gate 16 assuming bed extending positions, the available upper decking of the trailer 10 adapted to support loads is extended from being merely the length of the bed 12 as seen in Figure 1 to the combined length of the extended rear gate 15, bed 12 and the extended front gate 16 as seen in Figure 3.

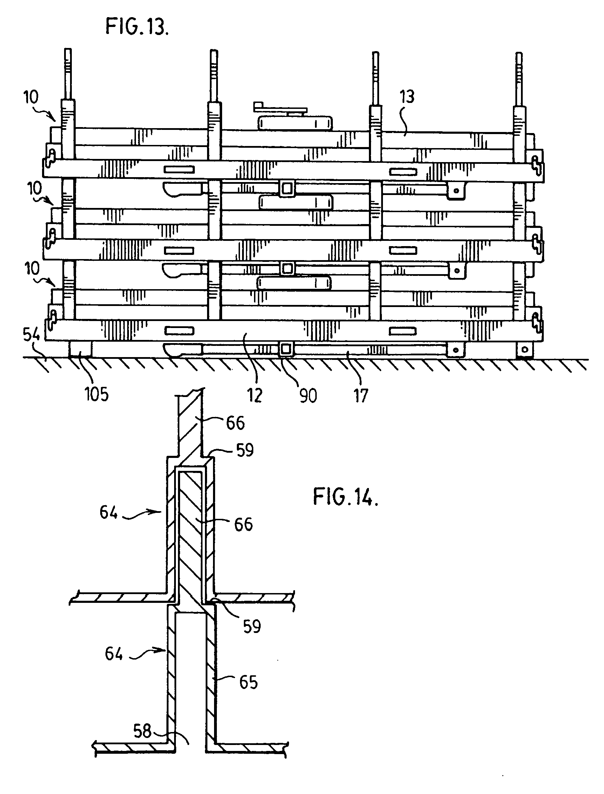

Reference is made to Figure 9 which illustrates the trailer 10 in an exploded view in the course of being disassembled and collapsed. Having regard to the end view as shown in Figure 8, the bed 12 is formed from a framework including longitudinal side beam members 60 and 61 and internal longitudinal beam members 62 and 63. The longitudinal side beam members 60 and 61 carry the exterior support brackets 36 and 37 at a rear end thereof. The longitudinal internal beams 62 and 63 carry the internal support brackets 38 and 39 at a rear end thereof. The bed 12 includes, as secured to the longitudinal side beams 60 and 61, eight stake posts 64 extending vertically upwardly. Each stake post 64 is swaged in the sense of having a square lower portion 65 which is of a greater diameter than a square upper portion 66. A support shoulder 59 is provided on each stake post 64 at the junction of the upper portion 66 and the lower portion 65. As seen in Figures 8 and 9, each side wall 13 and 14 is configured to have a hollow interior such that the side walls 13 and 14 may slide downwardly on top of the stake posts 64 on each side and to be vertically removable by vertically lifting and thereby sliding the side walls 13 and 14 upwardly. Preferably, a lock mechanism, not shown, is provided for locking each of the side walls 13 and 14 to the stake posts 64 or the bed 12 against undesired removal. The lower portion 65 of the stake posts 64 are hollow and, as best seen in Figure 14, the stake posts 64 are secured to the bed 12 in a manner that the hollow interior of the stake posts 64 is open downwardly via an opening 58 to underneath the trailer bed 12. This permits, as illustrated in Figure 13 and, particularly in Figure 14, when collapsed trailers 10 are to be stacked as illustrated in Figure 13, for the smaller upper portion 66 of the stake posts 64 of a lowermost trailer to be engaged nested inside the interior of the larger portion 65 of a stake post 64 of the trailer thereabove with the portions of the stake post 64 about the opening 58 resting on the support shoulder 59.

This provides for advantageous stacking of one trailer 10 upon the other in a nested manner such that the height occupied by two stacked trailers is less than the sum of the height of two trailers.

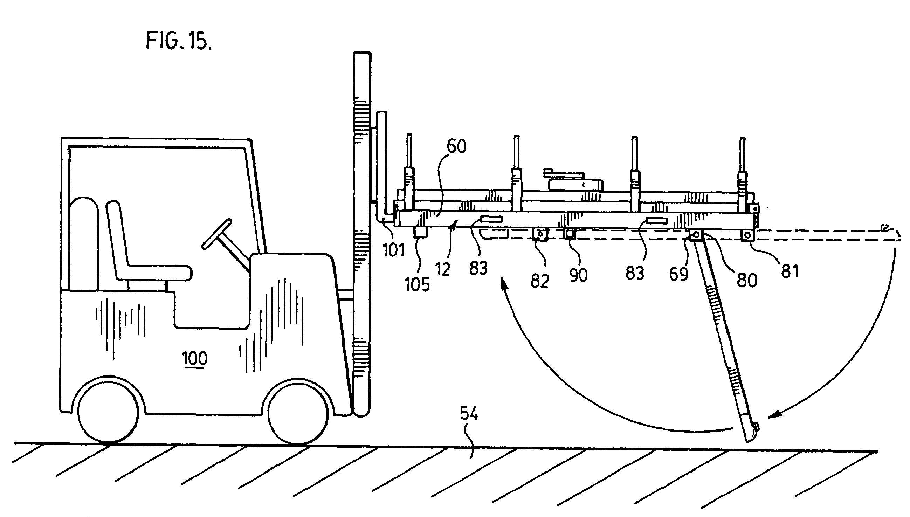

The tongue 17 has two side arms 67 and 68 which are pivotally connected to the bed 12 as to respective ones of the side beams 60 and 61 via tongue hinge tab 80 for pivoting about a pivot axis 69 from an extended, use position as shown in Figure 1 to a storage position illustrated in dashed lines in Figure 15 in which the tongue 17 underlies the bed 12 and is secured as by pinning to a rear tongue lock tab 82. The bed 12 is illustrated in Figure 15 as including a forward lock tab 81 via which the tongue 17 may be pinned to the bed 12 so as to be fixed in the extended use position. As seen in Figure 15, with the bed 12 raised sufficiently above the ground 54 as on a conventional forklift 100, the tongue 17 may be moved from an extended, use position to an inoperative position underlying the bed and locked in either position.

To permit movement and engagement of the trailer 10 via the forklift 100, forklift tongue openings and channelways to receive the forklift tongues are provided in the rear of the bed 12 and in each side of the bed 12. In this regard, as seen in Figure 15, openings 83 for the tongues 101 of the forklift 100 are illustrated extending into the longitudinal side beam 60. Similar openings may be provided on the other side of the trailer through the longitudinal side beams 61. Forklift tongue receiving openings 84 are provided into the rear of the bed 12 inside the longitudinal internal beams 62 and 63 shown between an upper bight 85 of the beams 62 and 63 and horizontally extending plates 86 and 87 welded in the beams 62 and 63 to extend longitudinally therein. Providing the entry points for the tongues 101 of the forklift 100 in both sides of the trailer and in the end of the trailer facilitates access to and movement of trailers whether individual, assembled or disassembled or stacked.

Referring again to Figure 9, the trailer 10 is shown in a collapsed position and being disassembled. In a collapsed position, the tongue 17 of the trailer is pivoted to lie up underneath the bed 12 of the trailer and to be secured thereto. The front gate 16 is folded rearwardly to overlie the bed 12. The rear gate 15 is moved to assume the storage position illustrated in Figure 7 overlying the bed 12. Each of the side walls 13 and 14 are removed by being lifted upwardly and off of the stake posts 64 and laid flat on top of the rear gate 15 and front gate 16 as illustrated in Figure 13. The side walls 13 and 14 may preferably have a height which is less than one half the distance between stake posts 64 on either side of the bed 12 so that they do not need to be stacked one on each other. The wheel assemblies 18 and 19 may be removed from engagement with the bed 12 and carried in various manners, preferably on top of the side wall 13 as illustrated in Figure 13.

As seen in Figure 13, three collapsed trailers 10 are stacked one upon the other with the stake posts 64 of each lower trailer engaging telescopically in a nesting manner inside the stake posts 64 of each trailer thereabove.

Reference is made to Figures 8, 9, 10, 11 and 12 which illustrates preferred wheel assemblies 18 and 19. As seen in Figures 8 and 9, two wheel sockets 90, each of which are a short length of a hollow square tube, are secured to the bed 12 as by being secured to the longitudinal side beams 60 and 62. Each wheel 91 is journalled about a wheel axle 92 fixedly secured to one end 93 of a lever arm 94. The other end 95 of the lever arm 94 carries fixedly secured thereto a cross member 96 having a cylindrical central portion 97 and four radially extending arms 98. The cross member 96 is located within a square hollow holding tube 102. Four resilient elastomeric or rubber-like spacers 10 are disposed between adjacent arms 98 of the cross member 96 and the corners of the square holding tube 102. The spacers 103 are configured to be friction fitted sandwiched between the cross member 96 and the corners of the square holding tube 102 against movement. In loading of the trailer, relative rotation of the cross member 96 relative to the holding tube 102 compresses the spacers 103 with the spacers 103 providing biased resistance to deflection of the lever member 94 and thus a torsioned suspension arrangement for the wheels. Since the spacers 103 have a longitudinal extent along the length of the cross member 96, they also provide for biased resistance to canting of the wheel out of the horizontal.

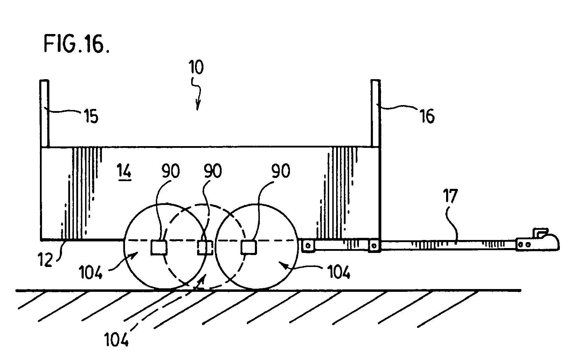

A removable wheel assembly 104 comprising the wheel 92, the lever arm 94, the cross member 96, the spacers 103 and the holding tube 102 is preassembled with the tension between the spacers 103 and the cross member 96 within the holding tube 102 sufficiently great that they cannot be disengaged. The wheel assembly 104 is secured to the trailer 10 merely by axially sliding the square holding tube 102 into a square socket 90 and locking them together as, for example, by use of suitable pinning mechanisms or catches or the like, not shown. Advantageously, a wheel fender 105 as seen in Figure 1 may be removably secured to the bed 12, for example, by pins or the like which pins or the like may be the same pins which can be used to lock the wheel assembly 104 to the bed 12. Each wheel assembly 104 may readily be removed for placement in some manner on a collapsed trailer as, for example, preferably as illustrated in Figure 13 between the beds 12 of the trailers 10 to be stacked. Insofar as a wheel assembly 104 has a dimension parallel to the axle 92 which renders it too large to be placed between the stacked beds 12 as, for example, seen in Figure 13, then the six wheels for all three trailers stacked as in Figure 13 could be placed merely on top of the bed of the uppermost stacked trailer. Alternatively, the wheel assemblies could be removed merely from the lowermost trailer 10 in a stack and be retained in the wheel sockets 90 on the uppermost trailers in a stack. In this regard, additional wheel sockets 90 could be provided on the bed 12. In this regard, reference is made to Figure 16 which illustrates a bed 12 being provided with three wheel sockets 90. This permits the same trailer 10 to be used either with a single wheel assembly 104 on each side as illustrated in dashed lines or with two wheel assemblies 104 on either side as shown in solid lines. Additionally, insofar as at least some of the trailers may be provided with two or more wheel sockets 90, then this could, for example, permit removing the wheel assemblies 104 from a lowermost trailer for a stack and securing of the removed wheel assembly from the lowermost trailer into extra wheel sockets 90 of trailers to be stacked thereabove.

While the invention describes a preferred torsion wheel assembly 104 which is readily adapted to be removably secured to the bed 12 of a trailer, other wheel mounting arrangements may be used without departing from the scope of this invention. Preferably, the wheel assemblies are removable and will not impede the ability of the tongue 17 to be moved from an extended use position to a stored position.

The present invention provides a method of storing and assembling a trailer. The method includes storing collapsed trailers 10 in a stack as illustrated in Figure 13, engaging the uppermost trailer 10 in a stack with a forklift and moving that trailer from the stack of trailers, raising the collapsed trailer to a height above the ground that the tongue 17 may be swung to an open position, pinning the tongue 17 in the open position, with the trailer raised off the ground by the forklift engaging the wheel assemblies onto the trailer, placing the trailer on the ground and placing the side walls 13 and 14 in place on the stake posts 64.

The invention preferably provides a trailer in which the bed 12 is provided with load carrying capabilities by reason of the longitudinal side beams 60 and 61 and the longitudinal interior beams 62 and 63. Having longitudinal interior beams 62 and 63 is advantageous so as to permit the upper deck surface 20 to be formed from relatively lightweight, low strength materials such as sheet metal which may extend transversely across the width of the trailer. As seen in Figure 8, one or more transverse beams 105 may preferably be provided at various locations as desired. The longitudinal side beams 60 and 61 are illustrated as being C-shaped channels directed inwardly. Each of the longitudinal interior beams 62 and 63 are shown as being of top hat shape which can be convenient for welding. At least one transverse longitudinal beam 105 would be provided at the forward end of the trailer, optionally, the same height as the longitudinal side beams 60 and 61. Figure 8 illustrates for convenience at least one lateral beam 105 disposed below the beams 62 and 63. This beam is illustrated in side view in Figures 13 and 15.

As seen in Figure 13, a lowermost collapsed trailer 10 engages the ground 54 to support the stack of trailers. This may be accommodated in a variety of ways. As shown, the support tabs 80, 81 and 82 to which the tongue 17 is secured may provide surfaces for engaging the ground as may the lowermost surface of the wheel sockets 90. As well, a ground contact support surface may be provided by the transverse beam 105. Insofar as a plurality of the wheel sockets 90 may be provided as, for example, shown in Figure 16, these wheel axles may themselves provide for stable engagement of the lowermost trailer of a stack with the ground. It is to be appreciated, therefore, that the trailers in accordance with Figures 1 to 16 may be collapsed and disassembled, may be stacked one upon the other without the need for any palletizing devices or braces or separate brackets or supports or the like. Alternatively, the removable stub posts can extend upwardly into the interior of the stake posts of the lowermost trailer for engagement with the ground.

A mechanism may be provided on the bed 12 or the rear gate 15 or the front gate 16 or on one or more of the stake posts 64 to provide for secure retention of a wheel assembly 104 for shipment and storage. For example, a square storage opening 108 may be provided to extend through the side walls 13 and 14 sized to have interior dimensions the same as the wheel socket 90 to receive when the side walls 13 and 14 lie flat on the bed 12, the holding tube 102 of a wheel assembly 104 such that the wheel assembly may be secured for shipment and storage. Similar storage openings could be provided in the front gate 16, rear gate 15 and/or the bed 12. If such storage openings 18 are provided, then snap-in, removable or cover plates may be provided which could, for example, when a trailer is being stored, be snapped onto the sockets which are normally to receive the wheel assemblies in use. If storage openings extend through a side wall 13 or 14 into the rear or front gate or into the deck, the locking of the wheel assembly for storage may also lock the side walls to the trailer for storage.

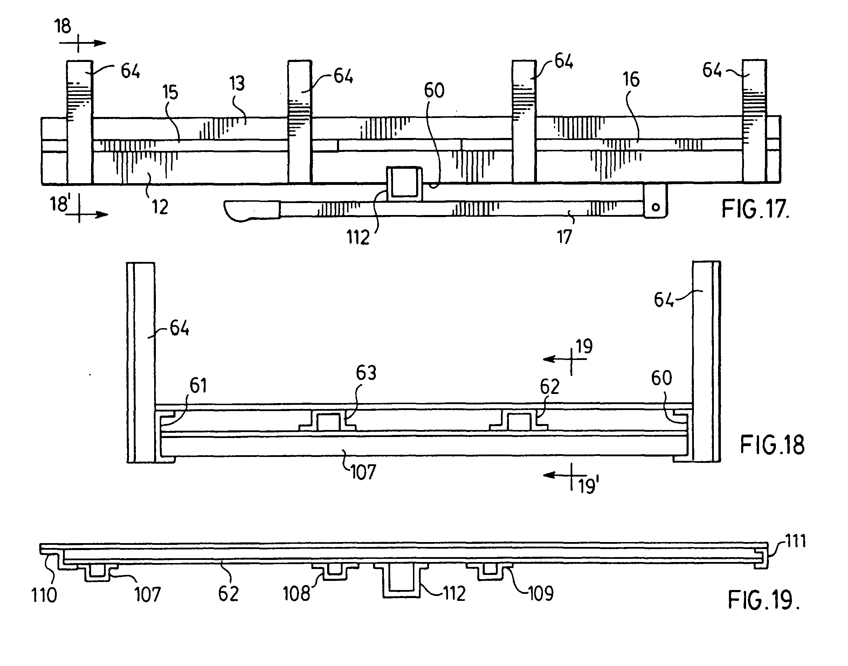

Reference is made to Figures 17 to 22 which illustrate a second embodiment of the trailer in accordance with the present invention which is similar in many respects to the trailer of the first embodiment. Similar reference numerals are used to refer to similar elements. The trailer of Figure 17 has a bed 12 with its rear gate 15 and front gate 16 folded to lie over top thereof and with the sidewalls, of which only side wall 13 is shown, stacked on top of the rear gate 15 and front gate 16. The particular mechanism by which the rear gate 15 or the front gate 16 is secured to the bed 12 is not illustrated.

Eight stake posts 64 extend upwardly. The stake post 64 are provided laterally outside the longitudinal side beam members 60 and 61 fixedly secured thereto. Internal longitudinal beam members 62 and 63 are shown to be of top hat configuration open downwardly. A cross beam member 107 is illustrated as extending side to side from the C-shaped side beam members 60 and 61 underneath the internal beam members 62 and 63. The transverse beam 107 is shown as being of top hat shaped and open upwardly. Other similar top hat shaped transverse beams 108 and 109 are shown.

At the rear, a Z-shaped transverse beam 110 is illustrated whose outer ledge is to be engaged as, for example, in a manner illustrated in Figure 6 by the rear edge 22 of the trailer gate. The Z bracket 110 is provided to provide reinforcing to the decking to assist in bearing loads as in the configuration of Figure 6. At the forward end of the trailer, a C-shaped beam member 111 extends across the width of the trailer.

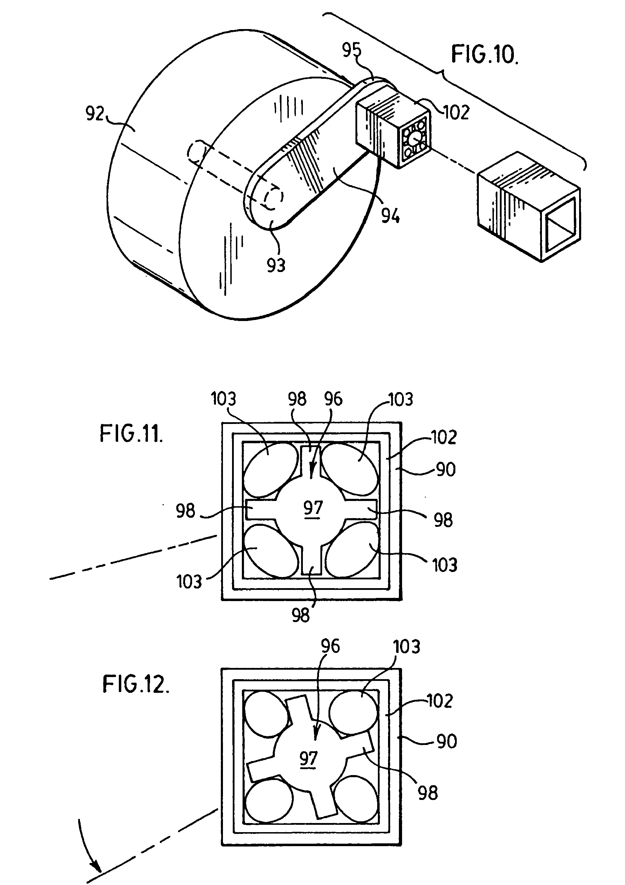

Figure 19 illustrates a top hat shaped axel beam 112 which extends under the internal longitudinal beam members 62 and 63 and open upwardly. The beam 112 has its ends welded to the side beam members 60 and 61 which are partly cut away to provide clear access to the entire interior of the axel beam 112. The axel beam 112 has a square opening therein to receive the square holding tube 102 of the wheel assemblies 18 and 19, such as illustrated in Figure 10. The beam 112 serves the purpose of providing a wheel socket functioning the same as the wheel sockets 90 in the first embodiment but for strength extending entirely across the width of the trailer.

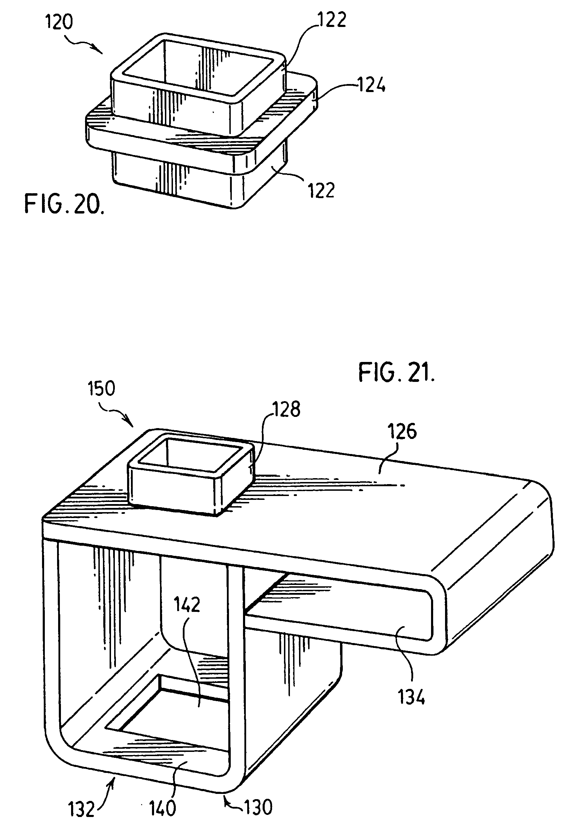

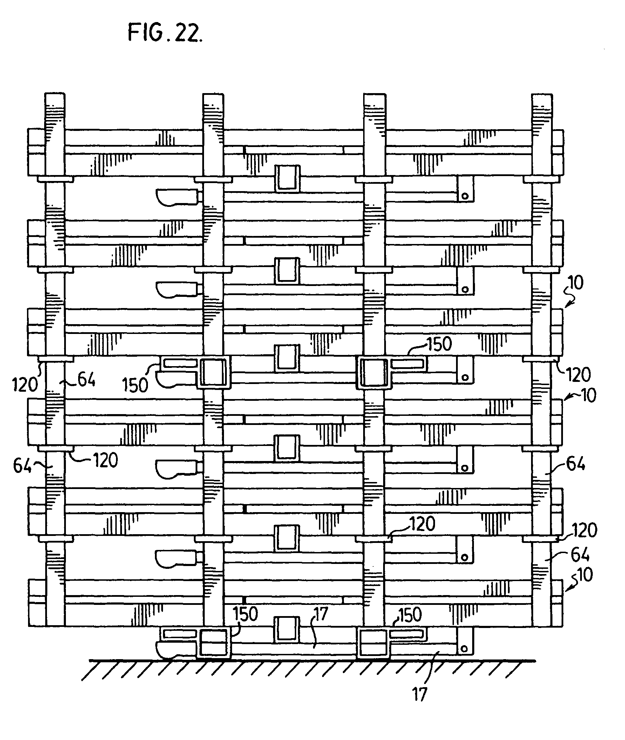

Figure 20 illustrates a spacer 120 which has a male plug 122 at each end and a spacer plate 124 therebetween. The spacer 120 is preferably relatively inexpensive as, for example, formed as a disposable item from plastic. Each of the male plugs 122 are adapted to telescopically receive inside the upper or lower end of one of the stake posts 64. As illustrated in Figure 22, between adjacent of the stacked trailers, spacers 120 are provided between vertically stacked posts 64 with one male element 122 to extend upwardly into the bottom of the post 64 above and another male element 122 to extend downwardly into the top of the post 64 below and with the spacer plate 124 spacing the ends of the posts apart.

Figure 21 illustrates a loading bracket 150. The loading bracket 150 has a spacer plate 126 carrying a male element 128. The male element 128 is like the male element 122 adapted to extend upwardly into the hollow interior of a bottom end of the post 64. As seen in Figure 22, two loading brackets are provided under adjacent of the stake posts 64 with the male element 128 extending upwardly into the hollow interior of its respective stake post 64. The loading bracket 150 carries a U-shaped support bracket 130 with a lower surface 132 for engagement with the ground. As seen, the loading bracket 150 supports the lowermost trailer with the lower portions of the trailer, in this case, the tongues 17 at a height above the ground. The loading bracket 150 also provides a forklift slot opening 134 to one side of the male element 128 underneath the spacer plate 126. When two loading brackets 150 are placed on a trailer as illustrated in Figure 22, the openings 134 for the forklift tongues are spaced to a desired distance apart and are adapted to permit engagement by forklift tongues to lift the loading brackets 150 and all trailers above loading brackets. Preferably, in use, a stake post 64 will be secured to the male element 128 of the loading brackets 150 as by screws, pins or the like.

The bottom plate 140 of the U-shaped support 130 is provided with an opening 142 to permit a stake post 64 to pass upwardly therethrough. Figure 22 illustrates loading brackets 150 as secured to the bottom of the fourth trailer 10 above the ground with the third trailer above the ground having its stake posts 64 extend upwardly through the opening 142 in the loading brackets to engage on a male element in the underside of the spacer plate 126 extending downwardly therefrom and not clearly shown in the drawings. With the spacer plate 126 of the loading brackets 150 having the same vertical height as the spacer plate 124 of the spacer 120, a stack of trailers is illustrated in Figure 22 with loading brackets between the third and fourth trailers will have the same height as a similar stack of trailers, however, having merely the spacers 120 between the third and fourth trailers. Provision of the loading brackets between the third and fourth trailer permits a forklift to engage the loading brackets underneath the fourth highest trailer so as to remove the fourth, fifth and sixth highest trailers as a unit from above the first, second and third highest trailers. The loading brackets may be provided between various bundles of trailers, for example, between every second trailer or every third trailer or a every fourth trailer as may be desired for shipping of several bundles of trailers. Preferably, for each bundle of trailers between the loading brackets, an appropriate number of wheel assemblies 18 and 19 will be secured to the bundle. For example, as illustrated in Figure 22, for trailers having two wheels each, six wheel assemblies, not shown in Figure 22 are to be mounted to each bundle of three trailers preferably, for example, by mounting to one or the other side of the trailers as with straps or the like.

It is to be appreciated that for each trailer to receive loading brackets that four loading brackets are to be utilized two on each side.

While the invention has been described with reference to preferred embodiments, many modifications and variations will now occur to a person skilled in the art. For a definition of the invention, reference is made to the following claims.

## Claims

1. A trailer comprising:
a bed supported on a wheel assembly, the bed having an upper deck surface ending at a deck edge,
a gate member having a base edge opposite to a top edge, and two side edges bridging between the base edge and the top edge,
the gate base edge coupled to the deck open edge of the bed by a coupling mechanism for pivoting about a generally horizontal axis between a closed position in which the gate extends from the deck open edge upwardly away from the bed open edge and an extension position in which the gate member extends outwardly from the bed as an extension of the bed with the base edge engaging the deck edge from below inwardly of the axis to prevent pivoting of the top edge of the gate member downwardly beyond the extension position.

2. A trailer according to claim 1 further comprising:
open positions in which the gate extends downwardly away from the bed open edge permitting movement of the gate member relative to the bed between a plurality of positions, and
the coupling mechanism comprising:
pin members carried the gate member proximate the base edge extending parallel the axis,
the pin members spaced from each other longitudinally of the axis, support bracket members carried by the bed proximate the deck edge generally normal to the axis,
the bracket members spaced from each other longitudinally of the axis,
each bracket member having a slotway therethrough sized to receive a respective one of the pin members and guide the pin member received in its respective slotway for sliding movement in the slotway between a plurality of different positions,
the different positions including a first position and a second position,
in the first position the pin member is pivotable in the slotway for pivoting of the gate member between the open position and the closed position without interference with the deck edge,
in the second position the pin member permits location of the gate member relative to the bed in an extension position in which the gate member extends outwardly from the bed as an extension of the bed with the base edge engaging the deck edge from below inwardly of the pin member to prevent pivoting of the top edge of the gate member downwardly from the extension position.

3. A trailer as claimed in claim 1 or 2 wherein in the second position the pin member is pivotable in the slotway for pivoting of the gate member between the extension position and open positions without interference with the deck edge.

4. A trailer as claimed in claim 3 wherein the second position is inward relative the bed from the first position.

5. A trailer as claimed in claim 3 wherein the second position is upward relative the bed from the first position.

6. A trailer as claimed in claim 4 wherein the slotway has a first elongate forward channelway portion with the first position at a lower blind end thereof sized to journal its pin member therein , and a second elongate rear channelway portion with the second position at a lower blind end thereof sized to journal its pin member therein,
the first channelway portion connecting with the second channelway portion spaced from the first position and the second position.

7. A trailer as claimed in claim 1 or 2 wherein the different positions including a third position,
in the third position the pin member is pivotable in the slotway for pivoting of the gate member to a storage position in which the gate member lies on top of the deck supported by the deck with the gate member extending inwardly of the bed from its base edge to its top edge with the top edge of the gate member located inwardly from the deck edge.

8. A trailer as claimed in any of the foregoing claims wherein in the third position the base edge of the gate member does not extend outwardly of the bed beyond the deck edge.

9. A trailer as claimed in any of the foregoing claims wherein the third position is upward relative the bed from the first position.

10. A trailer as claimed in any of the foregoing claims wherein the third position is inward relative the bed from the first position.

11. A trailer as claimed in any of the foregoing claims wherein in moving from the second position to the third position the pin members move upwardly relative the bed.

12. A trailer as claimed in any of the foregoing claims wherein the third position is upward relative the bed from the second position

13. A trailer as claimed in any of the foregoing claims wherein the slotway has a first elongate forward channelway portion with the first position at a lower blind end thereof sized to journal its pin member therein, and a second elongate rear channelway portion with the second position at a lower blind end thereof sized to journal its pin member therein and with the third position at an upper blind end thereof sized to journal its pin member therein,
the first channelway portion connecting with the second channelway portion spaced from the first position, the second position and the third position.

14. A trailer as claimed in any of the foregoing claims wherein in the third position the gate member is pivotable from the storage position to positions in which the gate member extends vertically upwardly.
